# EUROPEAN PATENT SPECIFICATION

(11) **EP 2 845 789 B1**
(45) Date of publication and mention of the grant of the patent: **21.09.2016**
(21) Application number: 14162971.7
(22) Date of filing: 31.03.2014
(51) Int. Cl.: B62K 23/06

(54) **Shifting structure for a bicycle**
Schaltstruktur für ein Fahrrad
Structure de changement de vitesses pour une bicyclette

(30) Priority: 09.09.2013 TW 102132338
(43) Date of publication of application: 11.03.2015
(73) Proprietor: Kind Shock Hi-Tech Co., Ltd., Tainan City 709 (TW)
(72) Inventor: Hsu, Jung Yu, 709 TAINAN CITY (TW)
(74) Representative: Chaillot, Geneviève

(56) References cited:
- EP-A2- 0 165 605
- EP-A2- 1 820 725
- WO-A1-93/14956
- BE-A- 625 166
- DE-U1-202006 005 454
- FR-A1- 2 580 745
- US-A- 4 684 281

## Description

### FIELD OF THE INVENTION

The present invention relates to a controlling device, and more particularly to a shifting structure for a bicycle to adjust a height of a rotary shift set and to tighten or loosen a steel rope.

### BACKGROUND OF THE INVENTION

US 4,684,281 is the closest prior art and discloses all of the features of the preamble of claim 1.

Conventional locking device for a bicycle handlebar is disclosed in TW Utility Model No. 096216981 and contains a holder having an abutting portion surrounding the bicycle handlebar. The abutting portion has a curve contacting face and a biasing face for contacting with the curve contacting face. The locking device also contains a grip pivoted on the holder, a clamping unit having a first surrounding piece and a second surrounding piece which are mounted on two sides of the grip, and an adjusting member inserted into the holder, the first surrounding member, and the second surrounding member, wherein the first surrounding piece and the second surround piece contact with the biasing face and the grip, and the first surrounding piece pivoted with the second surrounding piece, wherein among the first surrounding piece, the second surround piece, and the abutting portion is defined a fixing orifice to insert the handlebar.

TW Utility Model No. 101215332 discloses a shifting device of a shock absorbers for a bicycle containing an inner rope; a shifting post connected with one end of the inner rope and including a body with a groove and a central axis, wherein the groove has a fastening portion; a rod rotating along the central axis of the body, and the body being used to position the inner rope; a shaft pivoted with the rod and having a pivoting point spaced from the central axis, wherein between the shaft and the rod generating a repulsive force; a column coupled with the shaft, moving in the groove, and guided into a guiding-in position of the fastening portion and guided out of a guiding-out- position of the fastening portion; a guide seat coupled with the inner rope and having a rotating member connected with the inner rope and rotating around a central axis, and a resilient element fitted on the inner rope, wherein one end of the resilient element is fixed on the rotating member, and the resilient element is pushed after the column is moved to the guide-out position so as to push the rotating member to move back to an original position.

TW Utility Model No. 098220956 discloses a controlling device contains a positioning seat one piece formed and having a groove for inverting a handle, wherein the positioning seat having a connecting portion and a through hole; an operating stem having a pivoting portion, a rotation portion on two sides of the pivoting portion, and a coupling portion, wherein the operating stem is in connection with a joining element by using the pivoting portion so as to rotatably connect with the connecting portion of the positioning seat, such that the coupling portion of the operating stem rotates in the connecting portion, and the coupling portion has an orifice; a control assembly including a rope inserted into the through hole and a core inserted into the orifice.

However, such conventional prior arts cannot adjust a height of a shift set and tighten or loosen the rope simultaneously. In addition, they have complicated structure.

The present invention has arisen to mitigate and/or obviate the afore-described disadvantages.

### SUMMARY OF THE INVENTION

The primary object of the present invention is to provide a shifting structure for a bicycle which adjusts a height of a rotary shift set relative to a bicycle device based on using requirement.

Secondary object of the present invention is to provide a shifting structure for a bicycle which is simplified and is lightweight.

Furthermore object of the present invention is to provide a shifting structure for a bicycle which is operated easily and quickly.

Another object of the present invention is to provide a shifting structure for a bicycle which tighten or loosen a steel rope on basis of using requirement.

To obtain the above objectives, a shifting structure for a bicycle is fixed on a handlebar of a bicycle to control a bicycle device and contains: a clamping assembly, a rotary shift set, a height adjusting assembly, and a tightness adjusting set.

The clamping assembly includes a first retainer, a second retainer corresponding to the first retainer, two hollow engaging portions defined on the first retainer and the second retainer and used to engage the handlebar, and a positioning bolt for screwing the first retainer and the second retainer together.

The rotary shift set includes a rotating seat and a rotation member pivoted on a first end of the rotating seat and rotated by a rider to rotate on the rotating seat.

The height adjusting assembly is fixed between the clamping assembly and the rotary shift set and includes two retaining portions, each having a central axis line for matching with a central axis line of each engaging portion so that an angle θ is defined between the central axis line of each retaining portion and the central axis line of each engaging portion. The rotating seat has an abutting post one piece formed on a second end thereof and retained and moving in the two retaining portions of the height adjusting assembly, and by unscrewing and screwing the positioning bolt, the height adjusting assembly is moved and fixed.

The tightness adjusting set is mounted on the height adjusting assembly and includes a screwing element inserted into and screwed with the abutting post, a rotatable button fitted on the screwing element and fixed on an end portion of the abutting post, a fitting member and a steel rope which are inserted into the screwing element and the abutting post and are positioned on the rotation member, a first end of the steel rope connecting with the bicycle device. The rotation member pulls the steel rope when the rotating seat rotates so that the screwing element and the rotatable button rotate simultaneously to change a distance between the abutting post and the screwing element, hence a length of a part of the steel rope outside the fitting member is adjusted to pull the steel rope tightly or loosely.

Preferably, a central axis line of each retaining portion and the abutting post is not parallel to a central axis line of the handlebar and each engaging portion, and an angle θ between the central axis line of each retaining portion and the abutting post and the central line of the handlebar and each engaging portion is within 1 to 60 degrees.

Preferably, the rotary shift set also includes a connecting member having a first coupling element inserted through the rotation member and a second coupling element inserted through the rotating seat and screwing with the first coupling element, such that the rotating seat and the rotation member are connected together by ways of the first coupling element and the second coupling element.

Preferably, each retaining portions has a concaved face formed thereon, and the abutting post is conical to retain with the two retaining portions of the height adjusting assembly.

Preferably, each retaining portion has an obliquely quadrilateral trench formed thereon, and the abutting post is formed in a quadrilateral column shape so as to contact with the two retaining portions.

Preferably, each retaining portion has a beveled trench formed in a wave shape, and the abutting post is formed in a waved column shape so as to contact with the two retaining portions.

Preferably, the rotation member has a stepped notch for inserting the steel rope, and the steel rope has a fixing tab disposed on one end thereof.

Preferably, the screwing element has a threaded end screwed with the abutting post, a head end exposing outside the abutting post and fitted into the rotatable button, and a receiving groove formed in an inner wall thereof so as to fit the fitting member; the tightness adjusting set also includes a resilient element mounted between the rotatable button and the screwing element so as to push the rotatable button toward the abutting post.

Preferably, the rotatable button has at least one recess defined therein and retaining with at least one rib on an outer wall of the head end of the screwing element.

Preferably, the bicycle device is any one of a front fork damper, a braking device and a seat adjustment device.

### BRIEF DESCRIPTION OF THE DRAWINGS

FIG. 1 is a perspective view showing the assembly of a shifting structure for a bicycle according to a first embodiment of the present invention.
FIG. 2 is a perspective view showing the exploded components of the shifting structure for the bicycle according to the first embodiment of the present invention.
FIG. 3 is a cross sectional view showing the assembly of the shifting structure for the bicycle according to the first embodiment of the present invention.
FIG. 4 is a plan view showing the assembly of the shifting structure for the bicycle according to the first embodiment of the present invention.
FIG. 5 is another cross sectional view showing the assembly of the shifting structure for the bicycle according to the first embodiment of the present invention.
FIG. 6 is a plan view showing the operation of the shifting structure for the bicycle according to the first embodiment of the present invention.
FIG. 7 is a cross sectional view showing the operation of the shifting structure for the bicycle according to the first embodiment of the present invention.
FIG. 8 is another cross sectional view showing the operation of the shifting structure for the bicycle according to the first embodiment of the present invention.

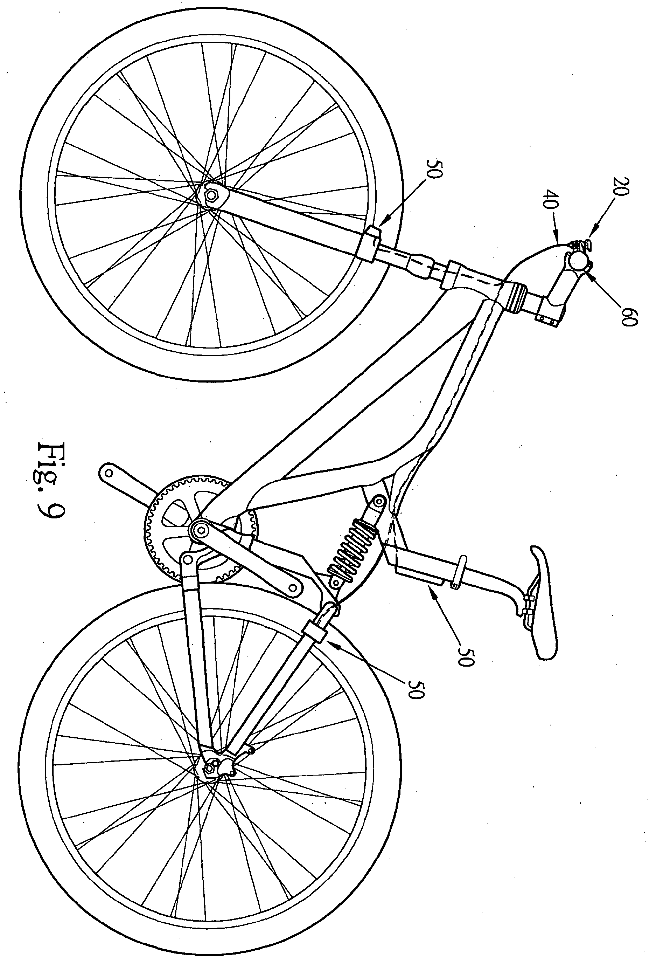

FIG. 9 is a plan view showing the application of the shifting structure for the bicycle according to the first embodiment of the present invention.
FIG. 10 is a perspective view showing the exploded components of a shifting structure for a bicycle according to a second embodiment of the present invention.
FIG. 11 is a cross sectional view showing the assembly of the shifting structure for the bicycle according to the second embodiment of the present invention.
FIG. 12 is a perspective view showing the exploded components of a shifting structure for a bicycle according to a third embodiment of the present invention.
FIG. 13 is a cross sectional view showing the assembly of the shifting structure for the bicycle according to the third embodiment of the present invention.

### DETAILED DESCRIPTION OF THE PREFERRED EMBODIMENTS

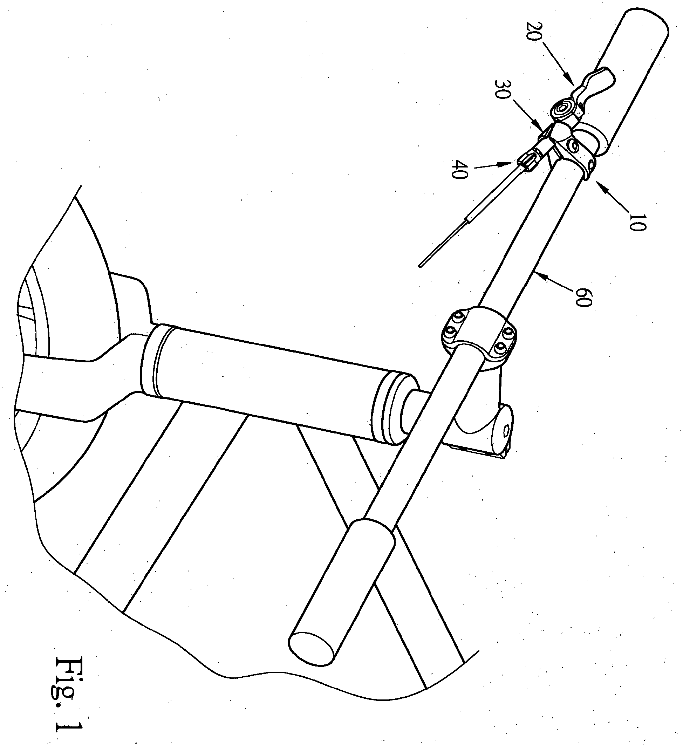

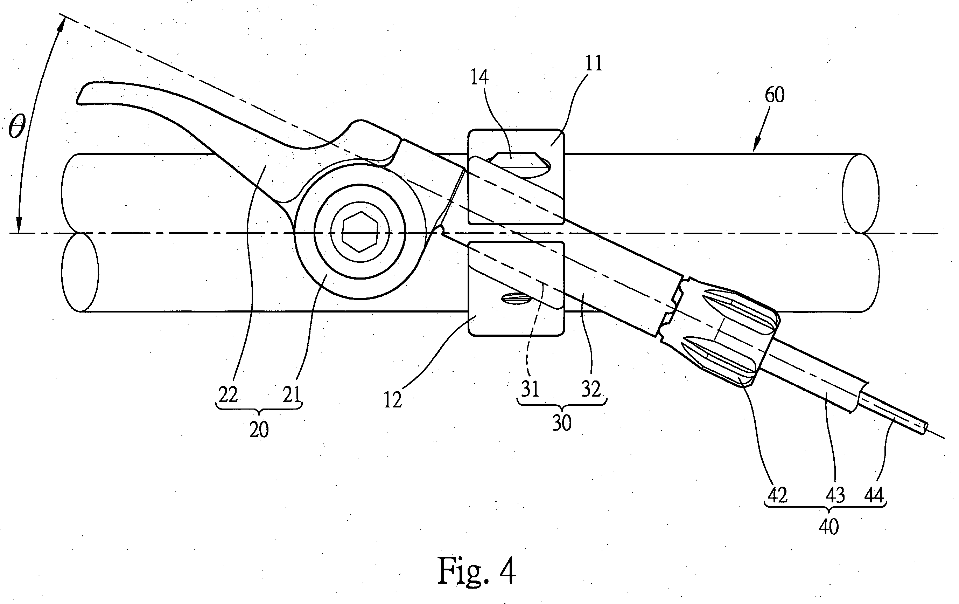

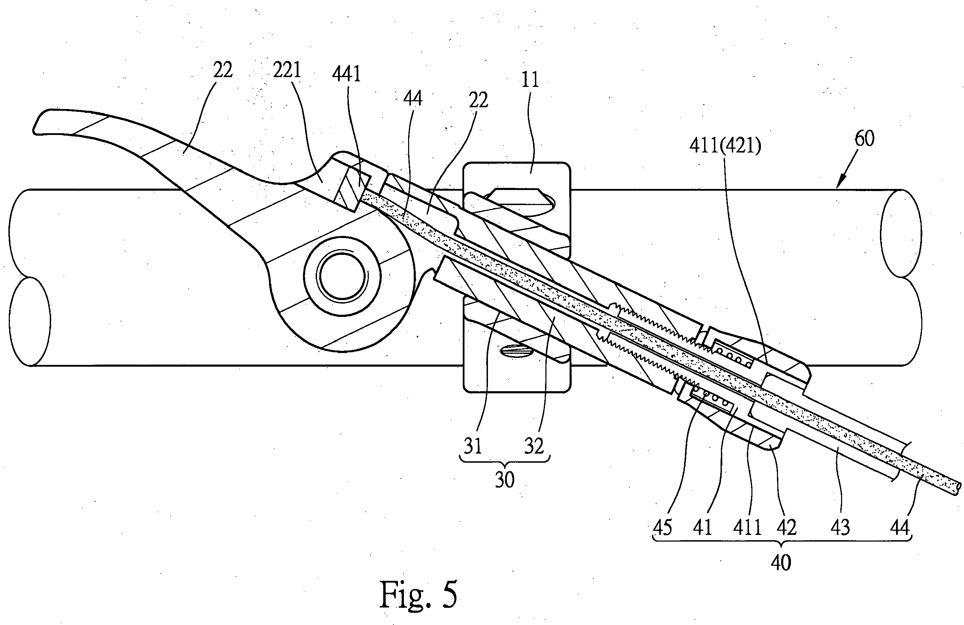

Referring further to FIGS. 1-8, a shifting structure for a bicycle according to a first embodiment of the present invention is fixed on a handlebar 60 of a bicycle to control a bicycle device 50 and comprises: a clamping assembly 10, a rotary shift set 20, a height adjusting assembly 30, and a tightness adjusting set 40.

The clamping assembly 10 includes a first retainer 11, a second retainer 12 corresponding to the first retainer 11, two hollow engaging portions 13 defined on the first retainer 11 and the second retainer 12 and used to engage the handlebar 60, and a positioning bolt 14 for screwing the first retainer 11 and the second retainer 12 together.

The rotary shift set 20 includes a rotating seat 21, a rotation member 22 pivoted on a first end of the rotating seat 21 and rotated by a rider, a connecting member 23 having a first coupling element 231 inserted through the rotation member 22 and a second coupling element 232 inserted through the rotating seat 21 and screwing with the first coupling element 231, such that the rotating seat 21 and the rotation member 22 are connected together by ways of the first coupling element 231 and the second coupling element 232.

The height adjusting assembly 30 is fixed between the clamping assembly 10 and the rotary shift set 20 and includes two retaining portions 31, each having a concaved face, wherein each retaining portion 31 has a central axis line for matching with a central axis line of each engaging portion 13 so that an angle θ is defined between the central axis line of each retaining portion 31 and the central axis line of each engaging portion 13. The rotating seat 21 has a conical abutting post 32 arranged on a second end thereof and retained and moving in the two retaining portions 31 of the height adjusting assembly 30, wherein a moving direction of the abutting post 32 is parallel to the central axis line of each retaining portion 31, and after unscrewing the positioning bolt 14, heights of the rotation member 22, the rotating seat 21, the abutting post 32, relative to the bicycle device 50 are adjusted, thereafter the positioning bolt 14 is screwed tightly to force the first retainer 11 and the second retainer 12 to contact with each other, thus positioning the handlebar 60 and the abutting post 32.

The tightness adjusting set 40 is mounted on the height adjusting assembly 30 and includes a screwing element 41 inserted into and screwed with the abutting post 32, a rotatable button 42 fitted on the screwing element 41 and fixed on an end portion of the abutting post 32, a fitting member 43 and a steel rope 44 which are inserted into the screwing element 41 and the abutting post 32 and are positioned on the rotation member 22, wherein a first end of the steel rope 44 connects with the bicycle device 50, the rotation member 22 has a stepped notch 221 for inserting the steel rope 44, and the steel rope 44 has a fixing tab 441 disposed on the second end thereof; the rotatable button 42 has four recesses 421 defined therein and retaining with four ribs 411 on an outer wall of a head end of the screwing element 41, such that the screwing element 41 engages and moves with the rotatable button 42, and a distance between the screwing element 41 and the abutting post 32 is change to adjust a length of a part of the steel rope 44 outside the fitting member 43, the rotation member 22 pulls the steel rope 44 as the rotating seat 21 rotates. The screwing element 41 has a threaded end screwed with the abutting post 32, the head end of the screwing element 41 exposes outside the abutting post 32 and is fitted into the rotatable button 42, and a receiving groove 412 formed in an inner wall thereof so as to fit the fitting member 43. The tightness adjusting set 40 also includes a resilient element 45 mounted between the rotatable button 42 and the screwing element 41 so as to push the rotatable button 42 toward the abutting post 32.

The positioning bolt 14 is unscrewed to move the rotary shift set 20 so that a height of the rotary shift set 20 relative to the handlebar 60 is adjusted, and then the positioning bolt 14 is screwed to position the rotary shift set 20 so that the height of the rotary shift set 20 relative to the handlebar 60 is fixed, thus adjusting the height of the rotary shift set 20 easily. In addition, related components of the height adjusting assembly 30 are one piece fixed between the clamping assembly 10 and the rotary shift set 20, thereby having simplified structure and easy assembly.

It is to be noted that a central axis line of each retaining portion 31 and the abutting post 32 is not parallel to a central axis line of the handlebar 60 and each engaging portion 13, and an angle θ between the central axis line of each retaining portion 31 and the abutting post 32 and the central line of the handlebar 60 and each engaging portion 13 is within 1 to 60 degrees.

Before assembling the height adjusting assembly 30, the abutting post 32 is one piece formed on the rotating seat 21, the two retaining portions 31 are one piece formed on the first retainer 11 and the second retainer 12.

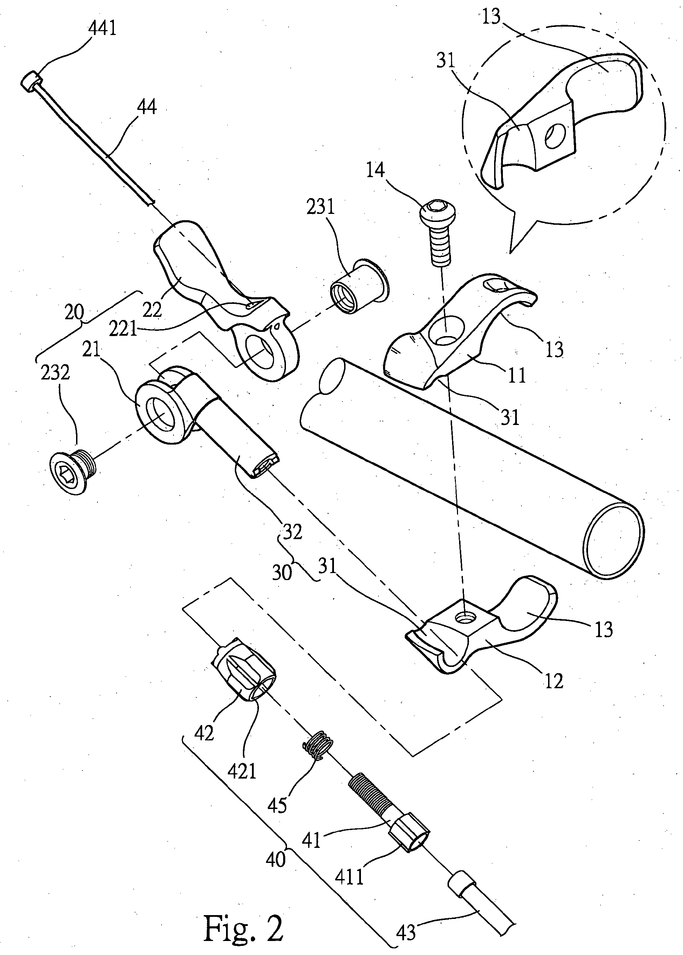

As shown in FIGS. 2 to 6, in assembly, the rotation member 22 is connected with the rotating seat 21 by screwing the first coupling element 231 and the second coupling element 232 together, and then the fitting member 43 is fitted into the receiving groove 412 of the screwing element 41, the resilient element 45 is fitted onto the screwing element 41. The fitting member 43, the screwing element 41, and the resilient element 45 are inserted into the rotatable button 42, such that the four ribs 411 retain with the four recesses 421, and the screwing element 41 and the fitting member 43 move linearly in the rotatable button 42. Thereafter, the steel rope 44 is inserted from the stepped notch 221 into the abutting post 32, the rotatable button 42, the resilient element 45, the screwing element 41, and the fitting member 43 so as to connect with the bicycle device 50.

After the rotary shift set 20, the height adjusting assembly 30, and the tightness adjusting set 40 are coupled together, the abutting post 32 is clamped by the two retaining portions 31 of the first retainer 11 and the second retainer 12, and the two hollow engaging portions 13 of the first retainer 11 and the second retainer 12 are engaged with the handlebar 60, then the positioning bolt 14 is screwed with the first retainer 11 and the second retainer 12 so as to lock the handlebar 60 and the abutting post 32, hence the rotary shift set 20, the height adjusting assembly 30, and the tightness adjusting set 40 are mounted on the handlebar 60, and the rotary shift set 20 and the abutting post 32 are fixed by the two retaining portions 31 of the first retainer 11 and the second retainer 12.

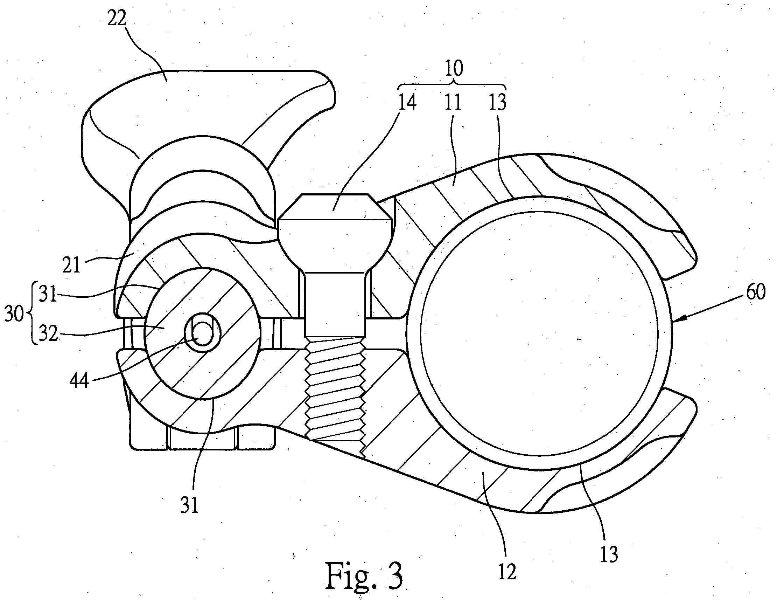

Referring to FIGS. 3-5, as desiring to adjust a position or a height of any one of the clamping assembly 10, the rotary shift set 20, the height adjusting assembly 30, and the tightness adjusting set 40, the positioning bolt 14 is unscrewed but not moved away from the first retainer 11 and the second retainer 12 so that the two hollow engaging portions 13 of the first retainer 11 and the second retainer 12 disengage from the handlebar 60, the abutting post 32 is unclamped by the two retaining portions 31 of the first retainer 11 and the second retainer 12, hence the handlebar 60 and the abutting post 32 are moved relative to the two hollow engaging portions 13 and the two retaining portions 31 so that the clamping assembly 10, the rotary shift set 20, the height adjusting assembly 30, and the tightness adjusting set 40 are moved linearly along a central axis direction of the handlebar 60, and the rotary shift set 20 and the height adjusting assembly 30 move along a central axis direction of the abutting post 32, such that the rotary shift set 20 and the height adjusting assembly 30 slants at a predetermined angle θ relative to the handlebar 60.

After the positioning bolt 14 is screwed, the first retainer 11 and the second retainer 12 are engaged together so as to retain the handlebar 60 and the abutting post 32, hence the two hollow engaging portions 13 of the first retainer 11 and the second retainer 12 engage with the handlebar 60, and the abutting post 32 is clamped by the two retaining portions 31 of the first retainer 11 and the second retainer 12.

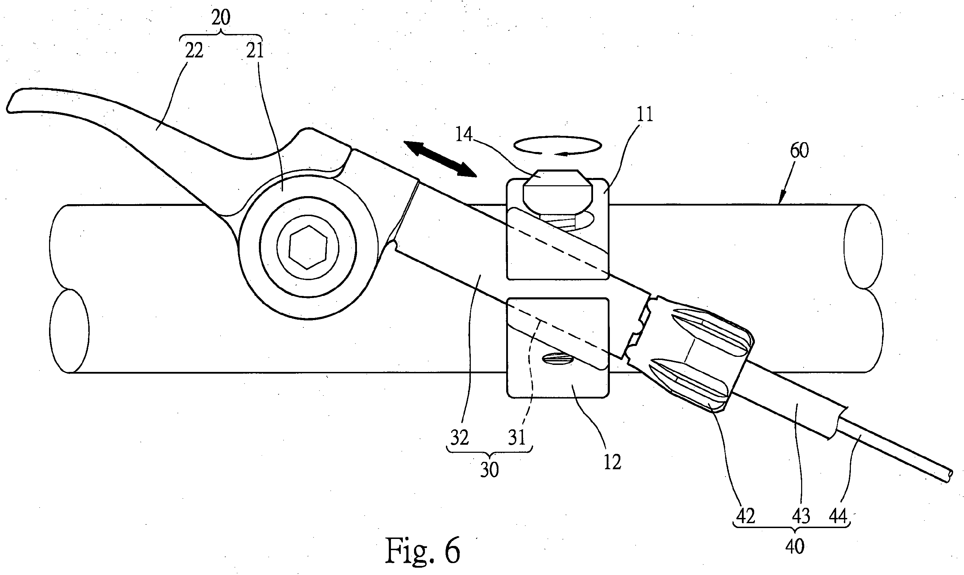

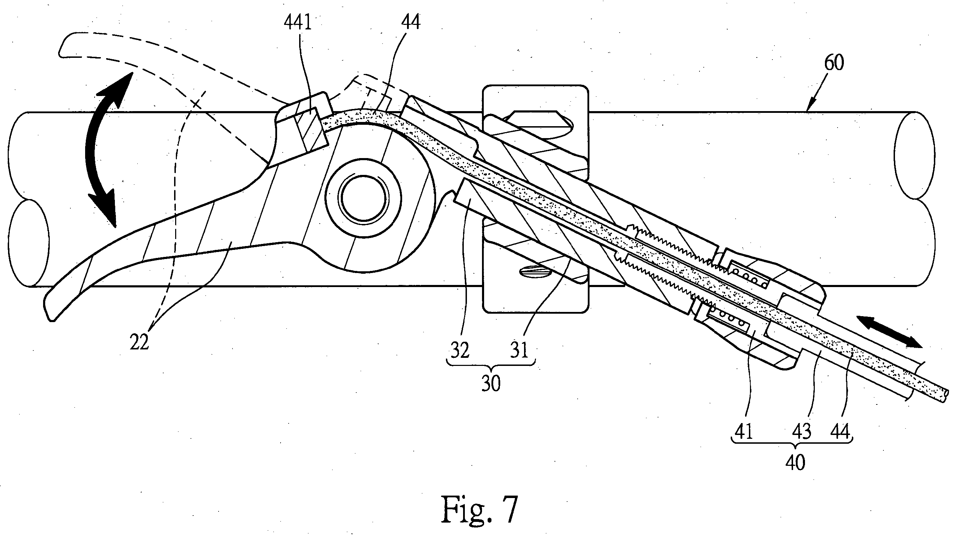

With reference to FIGS. 6 and 7, as desiring to drive the bicycle device 50, the rotation member 22 is shifted so that the second end of the steel rope 44 is pulled to become curved, and a part of the steel rope 44 inserted into the abutting post 32, the screwing element 41 and the fitting member 43 is pulled to move toward the rotation member 22, thus driving the bicycle device 50.

After releasing a shift of the rotation member 22, the part of the steel rope 44 inserted into the abutting post 32, the screwing element 41, and the fitting member 43 is pulled to move away from the rotation member 22 so that the second end of the steel rope 44 is pulled to return back to an original position.

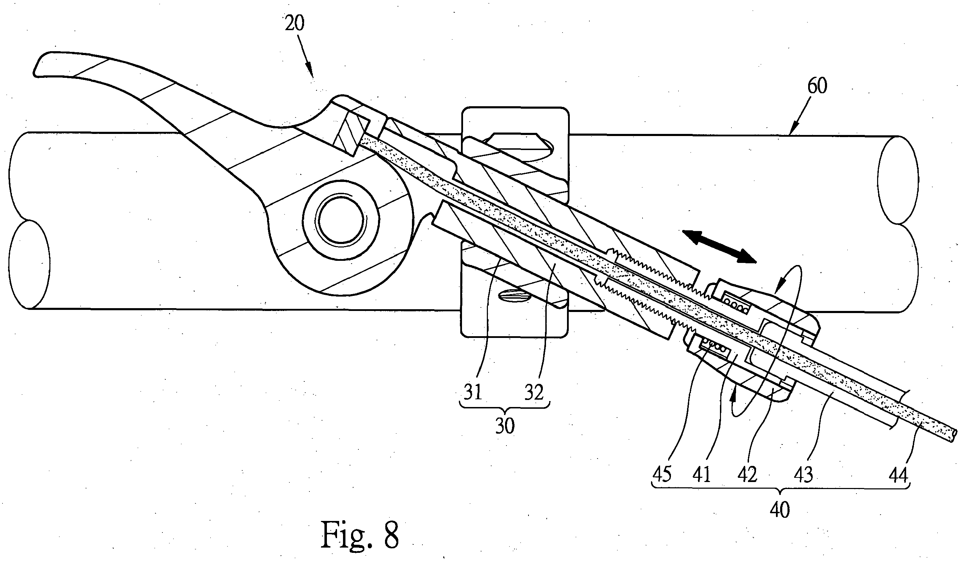

As shown in FIG. 8, after rotating the rotatable button 42 to adjust a position of the screwing element 41 relative to the abutting post 32, the longer the length of the screwing element 41 exposes outside the abutting post 32, the longer a length of the steel rope 44 exposes outside the fitting member 43, so the steel rope 44 is pulled tightly to rotate the rotation member 22, thus driving the bicycle device 50 finely. On the contrary, the shorter the length of the screwing element 41 exposes outside the abutting post 32, the shorter the length of the steel rope 44 exposes outside the fitting member 43, so the steel rope 44 is pulled loosely to rotate the rotation member 22, thus driving the bicycle device 50 insensitively.

The height adjusting assembly 30 is provided to adjust the height of the rotary shift set 20 based on using requirement.

The height adjusting assembly 30 is one piece formed on the clamping assembly 10 and the rotary shift set 20, thus simplifying structure and lowering weight.

By unscrewing the positioning bolt 14, the position of any one of the clamping assembly 10, the rotary shift set 20, the height adjusting assembly 30, and the tightness adjusting set 40 are adjusted relative to the handlebar 60, and the height of any one of the clamping assembly 10, the rotary shift set 20, the height adjusting assembly 30, and the tightness adjusting set 40 relative to the handlebar 60 are adjusted according to using requirement, thus adjusting positions and heights of the clamping assembly 10, the rotary shift set 20, the height adjusting assembly 30, and the tightness adjusting set 40 relative to the handlebar 60 easily.

The rotating the rotatable button 42 is rotated to adjust the position of the screwing element 41 relative to the abutting post 32, wherein the longer the length of the screwing element 41 exposes outside the abutting post 32, the longer the length of the steel rope 44 exposes outside the fitting member 43, so the steel rope 44 is pulled tightly to rotate the rotation member 22, thus driving the bicycle device 50 finely. On the contrary, the shorter the length of the screwing element 41 exposes outside the abutting post 32, the shorter the length of the steel rope 44 exposes outside the fitting member 43, so the steel rope 44 is pulled loosely to rotate the rotation member 22, thus driving the bicycle device 50 insensitively. In other words, the user can adjust the tightness of the steel rope 44 on basis of using requirement.

FIG. 8 is a cross sectional view showing the application of the shifting structure for the bicycle according to the first embodiment of the present invention, wherein the bicycle device 50 is a front fork damper, a braking device, or a seat adjustment device, and wherein the first end of the steel rope 44 is connected with the bicycle device 50 so as to control an operation of the front fork damper, the braking device, or the seat adjustment device. Likewise, the shifting structure can be also fixed on any one of a top tube, a down tube, a seat stay, a chain stay, and a front fork tube of a bicycle frame.

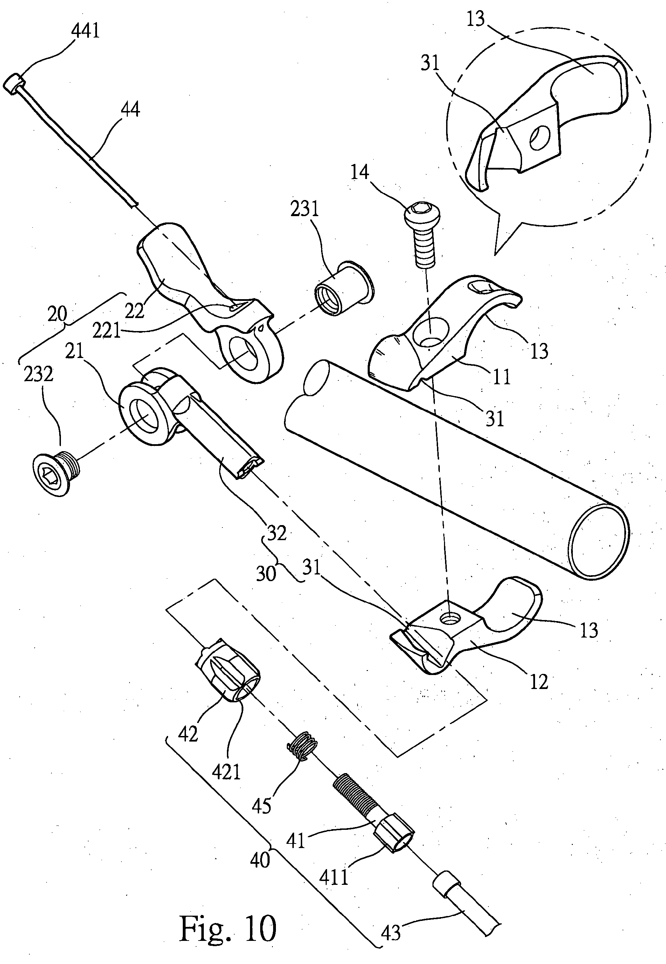

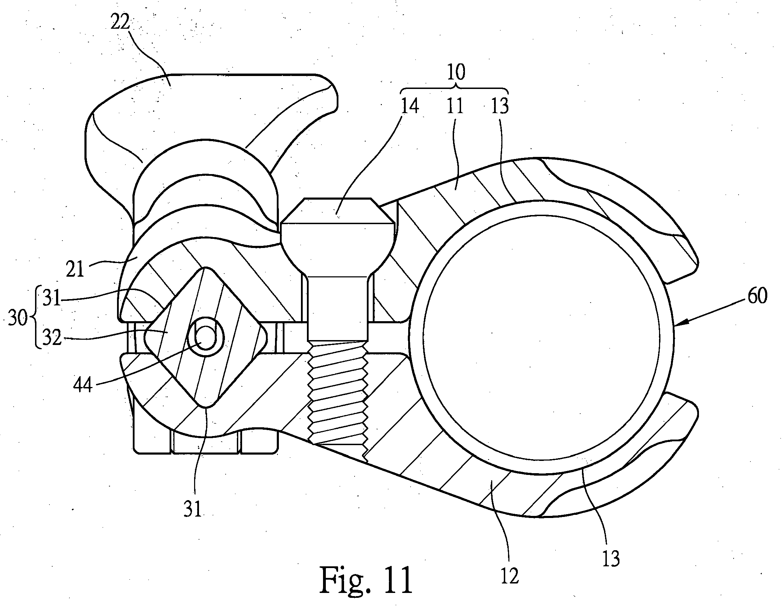

With reference to FIGS. 10 and 11, a difference of a shifting structure for a bicycle of a second embodiment from that of the first embodiment comprises: two retaining portions 31, each having an obliquely quadrilateral trench formed thereon; an abutting post 32 formed in a quadrilateral column shape so as to contact with the two retaining portions 31, such that the rotary shift set 20 and the height adjusting assembly 30 move linearly without rotating radially, so the rotation member 22 will not offset to rotate the handlebar 60 counterclockwise or clockwise, thus obtaining stable adjustment.

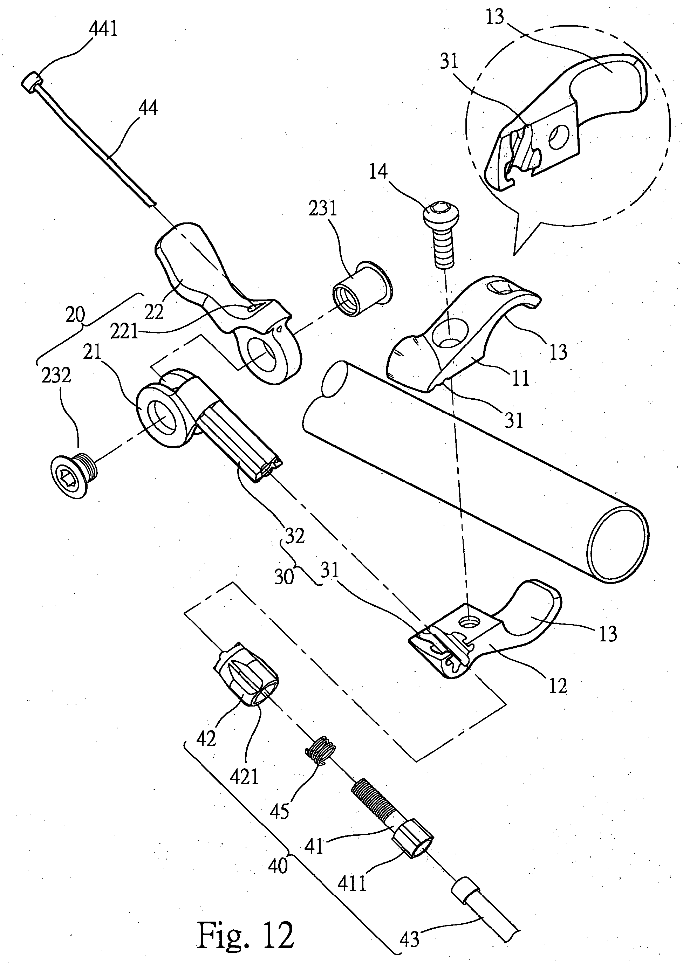

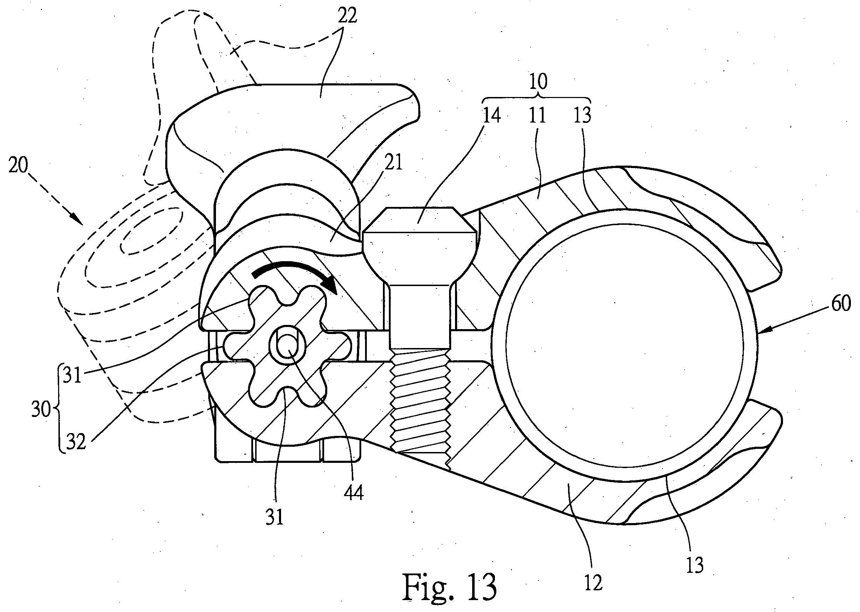

Referring further to FIG. 12-13, a difference of a shifting structure for a bicycle of a third embodiment from that of the first embodiment comprises: two retaining portions 31, each including a beveled trench formed in a wave shape and having a predetermined tilted angle θ; an abutting post 32 formed in a waved column shape so as to contact with the two retaining portions 31, such that the rotary shift set 20 and the tightness adjusting set 40 move linearly without rotation, and the rotation member 22 moves along the central axis of the abutting post 32 so as to achieve multi-section shifting adjustment, i.e., the rotation member 22 rotates toward the handlebar 60 counterclockwise or clockwise, thus obtaining stable adjustment.

Thereby, the shifting structure of the present invention is fixed on any one of the top tube, the down tube, the seat stay, the chain stay, and the front fork tube of the bicycle frame and is applied to adjust the position and the height of the rotary shift set and the height adjusting assembly simultaneously. The shifting structure is simplified and produced easily. Also, the shifting structure is lightweight and operated quickly, and the height adjusting assembly includes the tightness adjusting set mounted thereon so as to pull the steel rope tightly or loosely based on using requirement.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments of the invention.

## Claims

1. A bicycle shifting structure being fixed on a handlebar (60) of a bicycle to control a bicycle device and comprising:
a clamping assembly (10) including a first retainer (11), a second retainer (12) corresponding to the first retainer (11), two hollow engaging portions (13) defined on the first retainer (11) and the second retainer (12) and used to engage the handlebar (60), and a positioning bolt (14) for screwing the first retainer (11) and the second retainer (12) together;
a rotary shift set (20) including a rotating seat (21) and a rotation member (22) pivoted on a first end of the rotating seat (21) and rotated by a rider to rotate on the rotating seat (21);
**characterised in that** a height adjusting assembly (30) fixed between the clamping assembly (10) and the rotary shift set (20) and including two retaining portions (31), each having a central axis line for matching with a central axis line of each engaging portion (13) so that an angle θ is defined between the central axis line of each retaining portion (31) and the central axis line of each engaging portion (13);
wherein the rotating seat (21) has an abutting post (32) one piece formed on a second end thereof and retained and moving in the two retaining portions (31) of the height adjusting assembly (30), and by unscrewing and screwing the positioning bolt (14), the height adjusting assembly (30) is moved and fixed;
a tightness adjusting set (40) mounted on the height adjusting assembly (30) and including a screwing element (41) inserted into and screwed with the abutting post (32), a rotatable button (42) fitted on the screwing element (41) and fixed on an end portion of the abutting post (32), a fitting member (43) and a steel rope (44) which are inserted into the screwing element (41) and the abutting post (32) and are positioned on the rotation member (22), a first end of the steel rope (44) connecting with the bicycle device, wherein the rotation member (22) pulls the steel rope (44) when the rotating seat (21) rotates so that the screwing element (41) and the rotatable button (42) rotate simultaneously to change a distance between the abutting post (32) and the screwing element (41), hence a length of a part of the steel rope (44) outside the fitting member (43) is adjusted to pull the steel rope (44) tightly or loosely.

2. The bicycle shifting structure as claimed in claim 1, wherein a central axis line of each retaining portion (31) and the abutting post (32) is not parallel to a central axis line of the handlebar (60) and each engaging portion (13), and an angle θ between the central axis line of each retaining portion (31) and the abutting post (32) and the central line of the handlebar (60) and each engaging portion (13) is within 1 to 60 degrees.

3. The bicycle shifting structure as claimed in claim 1, wherein the rotary shift set (20) also includes a connecting member (23) having a first coupling element (231) inserted through the rotation member (22) and a second coupling element (232) inserted through the rotating seat (21) and screwing with the first coupling element (231), such that the rotating seat (21) and the rotation member (22) are connected together by ways of the first coupling element (231) and the second coupling element (232).

4. The bicycle shifting structure as claimed in claim 1, wherein each retaining portion (31) has a concaved face formed thereon, and the abutting post (32) is conical to retain with the two retaining portions (31) of the height adjusting assembly (30).

5. The bicycle shifting structure as claimed in claim 1, wherein each retaining portion (31) has an obliquely quadrilateral trench formed thereon, and the abutting post (32) is formed in a quadrilateral column shape so as to contact with the two retaining portions (31).

6. The bicycle shifting structure as claimed in claim 1, wherein each retaining portion (31) has a beveled trench formed in a wave shape, and the abutting post (32) is formed in a waved column shape so as to contact with the two retaining portions (31).

7. The bicycle shifting structure as claimed in claim 1, wherein the rotation member (22) has a stepped notch (221) for inserting the steel rope (44), and the steel rope (44) has a fixing tab (441) disposed on one end thereof.

8. The bicycle shifting structure as claimed in claim 1, wherein the screwing element (41) has a threaded end screwed with the abutting post (32), a head end exposing outside the abutting post (32) and fitted into the rotatable button (42), aid a receiving groove (412) formed in an inner wall thereof so as to fit the fitting member (43); the tightness adjusting set (40) also includes a resilient element (45) mounted between the rotatable button (42) and the screwing element (41) so as to push the rotatable button (42) toward the abutting post (32).

9. The bicycle shifting structure as claimed in claim 1, wherein the rotatable button (42) has at least one recess defined therein and retaining with at least one rib on an outer wall of the head end of the screwing element (41).

10. The bicycle shifting structure as claimed in claim 1, wherein the bicycle device is any one of a front fork damper, a braking device and a seat adjustment device.

## Patentansprüche

1. Fahrrad-Schaltkonstruktion, befestigt auf dem Lenker (60) eines Fahrrads, zur Kontrolle eines Fahrradgeräts und beinhaltet Folgendes:
eine Klemmvorrichtung (10) einschließlich einer ersten Halterung (11), einer zweiten Halterung (12) zugehörig zu der ersten Halterung (11), zwei gelochte Verbindungsteile (13), welche auf die erste Halterung (11) und die zweite Halterung (12) abgestimmt sind und dazu benutzt werden, am Lenker (60) befestigt zu werden und eine Positionsschraube (14), um die erste Halterung (11) und die zweite Halterung (12) zusammenzuschrauben;
ein drehbares Schaltset (20), einschließlich einer drehbaren Auflagefläche (21) und einem Rotationselement (22), welches auf einem ersten Ende der drehbaren Auflagefläche (21) drehbar wird und welches durch einen Reiter auf der drehbaren Auflagefläche (21) gedreht wird;
**gekennzeichnet dadurch, dass** eine Vorrichtung zur Höhenverstellung (30) zwischen der Klemmvorrichtung (10) und dem drehbaren Schaltset (20) fixiert ist und einschließlich zwei Halteelementen (31), wobei jedes über eine zentrale Achslinie verfügt, damit es mit einer zentralen Achslinie jedes Verbindungsteils (13) zusammenpasst, sodass ein θ-Winkel zwischen der zentralen Achslinie jedes einzelnen Halteelements (31) und der zentralen Achslinie jedes Verbindungsteils (13) definiert wird;
wobei die drehbare Auflagefläche (21) über eine angrenzende Stange (32) verfügt, welche auf eine zweite Ende davon einteilig wird und welche zur in die zwei Halteelemente (31) der Vorrichtung zur Höhenverstellung (30) gehalten und bewegt wird und durch das Auf- und Zudrehen der Positionsschraube (14) kann die Vorrichtung zur Höhenverstellung (30) bewegt und befestigt werden;
ein Justierungsset zum Feststellen (40) wird auf der Vorrichtung zur Höhenverstellung (30) montiert, einschließlich eines Schraubelements (41), welches darin eingeführt wird und mit der angrenzenden Stange (32) verschraubt wird, ein drehbarer Bolzen (42), welcher auf das Schraubelement (41) passt und an dem Ende der angrenzenden Stange (32) fixiert wird, ein Passteil (43) und ein Stahlseil (44), welche in das Schraubelement (41) und die angrenzende einteilige Stange (32) eingefügt werden und auf dem Rotationselement (22) positioniert werden, wobei ein erste Ende des Stahlseils (44) mit dem Fahrrad verbunden wird, wobei das Rotationselement (22) das Stahlseil (44) zieht, wenn die drehbare Auflagefläche sich dreht, sodass sich das Schraubelement (41) und der drehbare Bolzen (42) gleichzeitig drehen, um den Abstand zwischen der angrenzenden einteiligen Stange (32) und dem Schraubelement (41) zu ändern, somit wird eine Teillänge des Stahlseils (44) außerhalb des Passteils (43) so eingestellt, dass das Stahlseil (44) enger oder lockerer gezogen wird.

2. Schaltkonstruktion für ein Fahrrad, nach Anspruch 1, wobei eine zentrale Achslinie jedes Halteelements (31) und der angrenzenden Stange (32) nicht parallel zu einer zentralen Achslinie des Lenkers (60) und jedes Verbindungsteils (13) ist, und ein θ-Winkel zwischen der zentralen Achslinie jedes Halteelements (31) und der angrenzenden Stange (32) und der zentralen Linie des Lenkers (60) und jedes einzelnen Verbindungsteils (13) zwischen 1 und 60 Grad liegt.

3. Fahrrad-Schaltkonstruktion, nach Anspruch 1, wobei das drehbare Schaltset (20) außerdem ein Verbindungselement (23) beinhaltet, welches über ein erstes Gelenkelement (231) verfügt, das durch das Rotationselement (22) und ein zweites Gelenkelement (232) geführt wird, welches durch die drehbare Auflagefläche (21) und die Verschraubung mit dem ersten Gelenkelement (231) führt, sodass die drehbare Auflagefläche (21) und das Rotationselement (22) durch das erste Gelenkelement (231) und das zweite Gelenkelement (232) miteinander verbunden sind.

4. Fahrrad-Schaltkonstruktion, nach Anspruch 1, wobei jedes Halteelement (31) über eine gewölbte Seite verfügt, welche geformt darauf wird, und die angrenzende Stange (32) konisch ist, um mit den zwei Halteelementen (31) der Vorrichtung zur Höhenverstellung (30) verbunden werden zu können.

5. Fahrrad-Schaltkonstruktion, nach Anspruch 1, wobei jedes Halteelement (31) über eine schräge, vierseitige eingekerbte Einkerbung verfügt, welche geformt darauf wird, und die angrenzende Stange (32) als vierseitige Säule geformt ist, sodass der Kontakt mit den zwei Halteelementen (31) besteht.

6. Fahrrad-Schaltkonstruktion, nach Anspruch 1, wobei jedes Halteelement (31) über eine abgeschrägte Einkerbung in Kurvenform verfügt und die angrenzende Stange (32) als gewellte Säule geformt ist, sodass der Kontakt mit den zwei Halteelementen (31) besteht.

7. Fahrrad-Schaltkonstruktion, nach Anspruch 1, wobei das Rotationselement (22) über eine abgestufte Kerbe (221) verfügt, um das Stahlseil (44) einzufügen und das Stahlseil (44) verfügt über einen Befestigungsstreifen (441), der an einem Ende davon angewandt wird.

8. Fahrrad-Schaltkonstruktion, nach Anspruch 1, wobei das Schraubelement (41) ein Ende mit Gewinde hat und mit der angrenzenden Stange (32) verschraubt ist, wobei ein Kopfende aus der angrenzenden Stange (32) heraus schaut und in den drehbaren Bolzen (42) passt und eine Aufnahmenut (412), die in der inneren Wand davon geformt ist, sodass es in das Passteil (43) passt; das Justierset zum Feststellen (40) beinhaltet außerdem ein federndes Element (45), welches zwischen den drehbaren Bolzen (42) und das Schraubelement (41) montiert wird, sodass der drehbare Bolzen (42) gegen die angrenzende Stange (32) gedrückt wird.

9. Fahrrad-Schaltkonstruktion, nach Anspruch 1, wobei der drehbare Bolzen (42) über mindestens eine hierin definierte Kerbe verfügt und mit mindestens einer Rippe an der äußeren Wand des Endkopfes vom Schraubelement (41) fixiert ist.

10. Fahrrad-Schaltkonstruktion, nach Anspruch 1, wobei das Fahrradgerät ein Vordergabel-Dämpfer, eine Bremseinrichtung oder ein Gerät zur Sitzverstellung ist.

## Revendications

1. Structure de changement de vitesses de bicyclette fixée sur un guidon (60) d'une bicyclette pour commander un dispositif de bicyclette et comprenant :
un ensemble de serrage (10) comprenant un premier organe de retenue (11), un second organe de retenue (12) correspondant au premier organe de retenue (11), deux parties d'engagement creuses (13) définies sur le premier organe de retenue (11) et le second organe de retenue (12) et utilisées pour engager le guidon (60), et un boulon de positionnement (14) pour visser le premier organe de retenue (11) et le second organe de retenue (12) ensemble ;
un ensemble de changement de vitesses rotatif (20) comprenant un siège rotatif (21) et un élément rotatif (22) relié à pivotement sur une première extrémité du siège rotatif (21) et amené à tourner par un cycliste de façon à tourner sur le siège rotatif (21) ;
**caractérisé par le fait qu'**un ensemble de réglage en hauteur (30) est fixé entre l'ensemble de serrage (10) et l'ensemble de changement de vitesses rotatif (20) et comprenant deux parties de retenue (31), chacune ayant une ligne d'axe central destinée à correspondre à une ligne d'axe central de chaque partie d'engagement (13) de telle sorte qu'un angle θ est défini entre la ligne d'axe central de chaque partie de retenue (31) et la ligne d'axe central de chaque partie d'engagement (13) ;
le siège rotatif (21) ayant un tenon de soutien (32) formé d'un seul tenant sur une seconde extrémité de celui-ci et retenu et se déplaçant dans les deux parties de retenue (31) de l'ensemble de réglage en hauteur (30) et, par dévissage et vissage du boulon de positionnement (14), l'ensemble de réglage en hauteur (30) est déplacé et fixé ;
un ensemble de réglage en tension (40) monté sur l'ensemble de réglage en hauteur (30) et comprenant un élément de vissage (41) introduit dans et vissé avec le tenon de soutien (32), un bouton rotatif (42) monté sur l'élément de vissage (41) et fixé sur une partie d'extrémité du tenon de soutien (32), un élément de montage (43) et un câble en acier (44) qui sont introduits dans l'élément de vissage (41) et le tenon de soutien (42) et sont positionnés sur l'élément rotatif (22), une première extrémité du câble en acier (44) étant reliée au dispositif de bicyclette, l'élément rotatif (22) tirant le câble en acier (44) lorsque le siège rotatif (21) tourne de telle sorte que l'élément de vissage (41) et le bouton rotatif (42) tournent simultanément pour changer une distance entre le tenon de soutien (32) et l'élément de vissage (41), par conséquent une longueur d'une partie du câble en acier (44) à l'extérieur de l'élément de montage (43) est réglée pour tirer le câble en acier (44) de façon tendue ou de façon lâche.

2. Structure de changement de vitesses de bicyclette selon la revendication 1, dans laquelle une ligne d'axe central de chaque partie de retenue (31) et du tenon de soutien (32) n'est pas parallèle à une ligne d'axe central du guidon (60) et de chaque partie d'engagement (13), et un angle θ entre la ligne d'axe central de chaque partie de retenue (31) et du tenon de soutien (32) et la ligne centrale du guidon (60) et de chaque partie d'engagement (13) est compris entre 1 et 60 degrés.

3. Structure de changement de vitesses de bicyclette selon la revendication 1, dans laquelle l'ensemble de changement de vitesses rotatif (20) comprend également un élément de liaison (23) ayant un premier élément d'accouplement (231) introduit à travers l'élément rotatif (22) et un second élément d'accouplement (232) introduit à travers le siège rotatif (21) et se vissant avec le premier élément d'accouplement (231), de telle sorte que le siège rotatif (21) et l'élément rotatif (22) sont reliés ensemble au moyen du premier élément d'accouplement (231) et du second élément d'accouplement (232).

4. Structure de changement de vitesses de bicyclette selon la revendication 1, dans laquelle chaque partie de retenue (31) a une face concave formée sur celle-ci, et le tenon de soutien (32) est conique pour se retenir avec les deux parties de retenue (31) de l'ensemble de réglage en hauteur (30).

5. Structure de changement de vitesses de bicyclette selon la revendication 1, dans laquelle chaque partie de retenue (31) a une tranchée quadrilatérale oblique formée sur celle-ci, et le tenon de soutien (32) est formé en une forme de colonne quadrilatérale de façon à être en contact avec les deux parties de retenue (31).

6. Structure de changement de vitesses de bicyclette selon la revendication 1, dans laquelle chaque partie de retenue (31) a une tranchée en biseau formée en une forme cannelée, et le tenon de soutien (32) est formé en une forme de colonne cannelée de façon à être en contact avec les deux parties de retenue (31).

7. Structure de changement de vitesses de bicyclette selon la revendication 1, dans laquelle l'élément rotatif (22) a une encoche étagée (221) pour introduire le câble en acier (44), et le câble en acier (44) a une patte de fixation (441) disposée sur une extrémité de celui-ci.

8. Structure de changement de vitesses de bicyclette selon la revendication 1, dans laquelle l'élément de vissage (41) a une extrémité filetée vissée avec le tenon de soutien (32), une extrémité de tête exposée à l'extérieur du tenon de soutien (32) et montée dans le bouton rotatif (42), et une rainure de réception (412) formée dans une paroi interne de celle-ci de façon à monter l'élément de montage (43) ; l'ensemble de réglage en tension (40) comprend également un élément élastique (45) monté entre le bouton rotatif (42) et l'élément de vissage (41) de façon à pousser le bouton rotatif (42) vers le tenon de soutien (32).

9. Structure de changement de vitesses de bicyclette selon la revendication 1, dans laquelle le bouton rotatif (42) a au moins une cavité définie à l'intérieur de celui-ci et se retenant avec au moins une nervure sur une paroi externe de l'extrémité de tête de l'élément de vissage (41).

10. Structure de changement de vitesses de bicyclette selon la revendication 1, dans laquelle le dispositif de bicyclette est l'un quelconque d'un amortisseur de fourche avant, d'un dispositif de freinage et d'un dispositif de réglage de siège.
